# FASCICULE DE BREVET EUROPEEN

(11) **EP 2 846 438 B1**
(45) Date de publication et mention de la délivrance du brevet: **06.09.2017**
(21) Numéro de dépôt: 14171696.9
(22) Date de dépôt: 10.06.2014
(51) Int. Cl.: H02K 3/28, H02K 3/52, H02K 15/00

(54) **Isolant de bobine**
Spulenisolierung
Coil insulation

(30) Priorité: 10.06.2013 FR 1355303
(43) Date de publication de la demande: 11.03.2015
(73) Titulaire: VALEO EQUIPEMENTS ELECTRIQUES MOTEUR, 94046 Créteil Cedex (FR)
(72) Inventeur: El Baraka, Khadija, 77700 Serris (FR); Jugovic, Svetislav, 91200 Athis-Mons (FR)
(74) Mandataire: Ribeil, Alexandre

(56) Documents cités:
- EP-A1- 2 290 788
- US-A1- 2004 245 882
- US-A1- 2012 112 580

## Description

### DOMAINE TECHNIQUE DE L'INVENTION

La présente invention concerne isolant de bobine, destiné notamment à être positionné autour d'une dent d'un stator ou d'un rotor d'une machine électrique et un stator ou rotor de machine électrique comportant des dents issues d'une culasse autour desquelles est positionné un tel isolant de bobine portant une bobine.

L'invention se rapporte en particulier au domaine des machines électriques telles que les moteurs, les alternateurs, ou les alterno-démarreurs.

### ETAT DE LA TECHNIQUE ANTERIEURE

De nombreuses machines électriques tournantes sont équipées d'un rotor à griffes doté d'un isolant, d'un bobinage d'excitation et d'aimants permanents. On connaît des machines électriques comportant un stator et un rotor solidaire d'un arbre. Le rotor pourra être solidaire d'un arbre menant et/ou menée et pourra appartenir à une machine électrique tournante sous la forme d'un alternateur comme décrit dans le document EP0803962 ou d'un moteur électrique comme décrit dans le document EP0831580.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents pouvant être positionnés à l'intérieur d'au moins certains de ces logements comme visible par exemple dans les figures 1 et 2 du document EP0803962.

Comme décrit dans le document FR2890798 auquel on se reportera pour plus de précisions, la machine comporte un rotor à griffes et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. On monte sur ces dents des bobines préformées réalisées à partir d'un fil enroulé sur plusieurs tours. Les fils consistent par exemple en un fil de cuivre revêtu d'émail.

EP-A-2290788 décrit un isolant de bobine ayant un corps ainsi qu'un rebord avant et un rebord arrière définissant une gorge de montage d'un enroulement d'un fil de bobine.

US-A-2004/0245882 décrit un isolant de bobine d'après le préambule de la revendication 1.

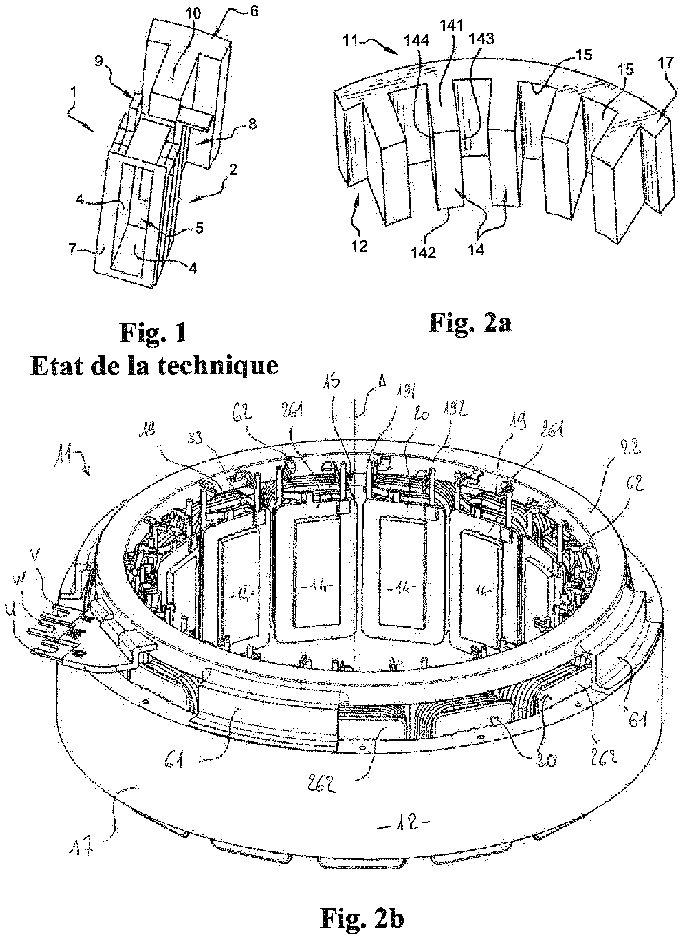

Comme cela est visible sur la figure 1, chaque bobine est montée autour d'un isolant d'encoche 1 électriquement isolant ayant un corps 2 comportant des parois 4 délimitant un cadre 5 de forme globalement rectangulaire. Le corps 2 de l'isolant comporte en outre un rebord avant 7 et un rebord arrière 8 définissant avec les parois 4 du cadre 5 une gorge de montage d'une bobine 9. Le rebord arrière 8 est destiné à être positionné à proximité de la culasse 6 tandis que le rebord avant 7 est situé du côté intérieur de la machine. L'ensemble est destiné à être enfilé autour de la dent 10.

Dans une forme de réalisation, deux bobines sont implantées dans une même encoche, chaque bobine étant enroulée autour de l'une des dents délimitant l'encoche par l'intermédiaire d'un isolant de bobine. Les bobines sont interconnectées entre elles, par exemple par soudure ou à l'aide d'un connecteur pour former une phase de la machine qui pourra être du type polyphasé.

Un problème se pose durant le bobinage du fil sur l'isolant de bobine de la dent du stator qui le porte, en particulier concernant le bon positionnement du fil de bobine à au moins une de ses extrémités qui est destiné à être soudé.

En effet, le fil de bobine, une fois enroulé autour de son isolant, présente alors une des deux extrémités qui est lâche, ce qui est gênant lors de l'opération de soudage. En outre, lorsque ces fils de bobines présentent un diamètre important, leur module d'élasticité augmente. En d'autres termes, les fils de bobines sont plus rigides. Cela implique qu'il est très difficile de conserver l'extrémité du fil de bobine dans la position désirée pendant tout le montage du rotor ou du stator et l'une et ou l'autre des extrémités du (ou des) fil(s) de bobine peuvent alors être difficile à souder, ou bien s'extraire inopinément de la gorge de montage de la bobine associée.

### EXPOSE DE L'INVENTION

L'invention vise à remédier à tout ou partie des inconvénients de l'état de la technique, en particulier au problème de positionnement de l'extrémité du fil de bobine dans son isolant.

Selon un premier aspect, l'invention concerne un isolant de bobine, destiné notamment à être positionné autour d'une dent d'un stator ou d'un rotor d'une machine électrique, cet isolant de bobine ayant un corps comportant des parois formant un cadre ainsi qu'un rebord avant et un rebord arrière définissant avec les parois du cadre une gorge de montage d'un enroulement d'un fil de bobine autour d'un axe d'enroulement (X), l'isolant étant caractérisé en ce qu'il comprend au moins un dispositif de fixation d'une extrémité du fil.

Un tel dispositif de fixation permet d'assujettir l'extrémité du fil quelque soit la flexibilité du fil de bobine, et même si son diamètre est important. Le montage d'un tel l'isolant sur une dent associée d'un stator ou d'un rotor d'une machine électrique est aisé grâce à la configuration de l'isolant configuré pour assujettir l'extrémité du fil.

Est entendu par le vocable « diamètre important », un diamètre sensiblement supérieur ou égal à 2 mm, en particulier pour un fil de cuivre.

Selon une caractéristique technique avantageuse, le dispositif de fixation comprend une patte de fixation solidaire de l'un des rebords de l'isolant, la patte de fixation étant mobile élastiquement par rapport à ce rebord entre une position au repos et une position de fixation, la position de fixation correspondant à une position dans laquelle la patte de fixation est en contact et en appui contre ladite extrémité du fil alors maintenue entre la patte de fixation et ledit rebord portant le dispositif de fixation.

Une telle patte de fixation élastique permet un blocage du fil de bobine en s'adaptant précisément au diamètre du fil. Par ailleurs, en fonction de la rigidité du fil de bobine qui sera enroulé autour de l'isolant, cette élasticité pourra être prédéterminée au préalable pour s'assurer du bon blocage de l'extrémité du fil.

Avantageusement encore, la patte de fixation est mobile élastiquement en rotation par rapport à ce rebord autour d'un axe de rotation (Y' ou Z') parallèle à l'un des axes (Y ou respectivement Z) orthogonaux à l'axe d'enroulement (X). Le système d'axes (X, Y, Z) est définit comme formant un trièdre de référence.

Selon un mode de réalisation, le rebord portant le dispositif de fixation présente un bord extérieur à partir duquel une saillie s'étend vers l'extérieur, la patte de fixation étant solidaire de la saillie et mobile élastiquement en rotation par rapport à cette saillie autour de l'axe (Z') parallèle à l'axe (Z) orthogonal à l'axe de référence (X).

En variante, la patte de fixation présente une base solidaire d'un bord extérieur du rebord portant le dispositif de fixation, la patte de fixation étant mobile élastiquement par rapport audit rebord autour de l'axe (Y') parallèle l'axe (Y) orthogonal à l'axe d'enroulement (X).

Dans une configuration avantageuse, la patte de fixation présente une épaisseur, la rotation élastique de la patte de fixation étant effectuée au moyen d'une zone de plus faible épaisseur que ladite épaisseur de la patte de fixation.

Selon une caractéristique technique particulière, les rebords avant et arrière présentent chacun deux bordures longitudinales et deux bordures transversales, et en ce que le dispositif de fixation est solidaire de l'un des rebords au niveau de sa bordure transversale. Ceci permet de faciliter la fixation des fils au connecteur du corps du stator.

Avantageusement, l'isolant comprend deux dispositifs de fixation, situés chacun sur le même rebord, et de préférence encore sur la même bordure transversale. Une telle caractéristique est particulièrement avantageuse dans le cas où le stator, ou le rotor, de la machine électrique comporte une pluralité de phases reliées entre elles et que des bobines d'une même phase sont connectées entre elles par au moins un fil de bobine continu. Dans une telle configuration, l'isolant est alors agencé pour assujettir chaque fil d'une même phase au moyen de deux dispositifs de fixation à chaque isolant de bobine. De préférence encore, ces deux dispositifs de fixation sont situés de chaque côté dudit isolant, l'un des dispositifs de fixation étant au voisinage de l'une des bordure transversale adjacentes, et le deuxième dispositif de fixation étant au voisinage de l'autre des bordure transversales adjacentes.

Dans une configuration dans laquelle deux dispositifs de fixations sont situés sur un même rebord, ces deux dispositifs peuvent être formés chacun de manière indépendantes et présentant indépendamment l'un de l'autre tout ou partie des caractéristiques précitées, soit ces dispositifs de fixations peuvent être formés par :
- deux pattes de fixations chacune solidaire à une même saillie du bord extérieur et mobile élastiquement en rotation par rapport à cette saillie ; ou
- deux pattes de fixations chacune présentant une base commune solidaire d'un bord extérieur du rebord portant le dispositif de fixation, les deux pattes de fixation étant mobiles élastiquement par rapport audit rebord.

Selon une autre caractéristique technique, les deux dispositifs de fixation sont disposés à une même hauteur, étant entendu par le vocable « hauteur », la distance séparant les parois formant cadre de la patte de fixation. Ceci permet en particulier de pouvoir fixer un fil continu d'une même phase à une même hauteur entre deux bobines. Chaque phase aura un dispositif de fixation à une hauteur spécifique de sorte à éviter que les fils soient entrecroisés de façon désordonnée, et pour faciliter le soudage des phases, quand il n'y a pas d'interconnecteur.

Avantageusement, la patte de fixation présente un corps comportant, à son extrémité distale, une partie recourbée. Ceci permet d'améliorer la fixation du fil et de la sécuriser.

En variante, la patte de fixation peut présenter une zone destinée à être en contact avec le fil de bobine, ladite zone pouvant être par exemple striée ou granulée de sorte à augmenter le coefficient de frottement entre ledit dispositif de fixation et le fil. Dans une configuration alternative, le dispositif de fixation peut présenter des dents anti-retour pour assurer cette fonction, les dents étant de préférence formée par des protubérances sensiblement longilignes s'étendant selon un axe parallèle à l'un des axes (Y, Z) orthogonaux à l'axe d'enroulement (X). De préférence encore, ces protubérances sont parallèles deux à deux et, de préférence, parallèle également au fil de bobine qu'il maintient, cela permettant de le bloquer de tout mouvement latéral du fil de bobine placé entre la patte de fixation et le rebord portant le dispositif de fixation alors est position de fixation.

Avantageusement, la patte de fixation est moulée monobloc avec le rebord associé. Ceci permet notamment de faciliter sa fabrication et limiter son coût sans détériorer sa fiabilité.

Selon un deuxième aspect, l'invention concerne un stator ou rotor de machine électrique comportant des dents issues d'une culasse autour desquelles est positionné un isolant de bobine tel que précédemment décrit portant une bobine.

Selon une caractéristique technique particulière, le stator ou rotor comporte n phases, des bobines d'une même phase étant connectées entre elles par au moins un fil de bobine continu, chaque fil d'une même phase étant maintenu par deux dispositifs de fixation à chaque isolant de bobine.

Avantageusement, les dispositifs de fixation du fil d'une même phase sont à une hauteur (hn), la hauteur (hn) étant différente pour chacune des n phases. Ceci permet notamment de simplifier le montage des bobines d'éviter que les fils s'entremêlent entre eux.

### BREVE DESCRIPTION DES FIGURES

D'autres caractéristiques et avantages de l'invention ressortiront à la lecture de la description qui suit, donnée uniquement à titre d'exemple, en référence aux figures annexées, qui illustrent :
- figure 1, déjà décrite, un isolant de bobine selon l'état de la technique destiné à être monté autour d'une dent d'un stator ;
- figures 2a et 2b, respectivement une représentation schématique d'un stator nu et d'un stator selon l'invention comportant des bobines montées sur des dents par l'intermédiaire d'un isolant de bobine selon un mode de réalisation ;
- figures 3a et 3b, respectivement des vues en perspective et de dessus 3b, sans bobinage, d'un isolant selon un mode de réalisation ;
- figure 3c, une vue en perspective, avec bobinage, d'un isolant selon ce mode de réalisation dans lequel un dispositif de fixation n'est pas sollicité ;
- figures 3d et 3e, des vues en perspective, avec bobinage, d'un isolant selon ce mode de réalisation dans lequel un dispositif de fixation est en position de fixation d'une extrémité d'un fil de bobinage ;
- figure 4, une vue en perspective d'un isolant selon un autre mode de réalisation ;
- figure 5, une représentation schématique suivant une vue en coupe transversale du système d'accrochage entre un isolant de bobine selon l'invention et une dent du stator de la figure 1; ,
- figure 6, une vue en coupe longitudinale de l'isolant de bobine selon l'invention montrant les différentes épaisseurs des parois du corps de l'isolant de bobine.

Pour plus de clarté, les éléments identiques ou similaires sont repérés par des signes de référence identiques sur l'ensemble des figures 2 et suivantes.

### DESCRIPTION DETAILLEE D'UN MODE DE REALISATION

Les figures 2a et 2b montrent un stator 11 d'axe Δ ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords 141, 142, 143 et 144 parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe Δ. Le paquet de tôles est maintenu au moyen de rivets (non représentés) traversant axialement de part en part l'empilement des tôles. Comme cela est visible sur la figure 2b, on monte sur les dents 14 du stator des bobines 19 préformées. Ces bobines 19 sont réalisées à partir d'un ou plusieurs fil(s) enroulé(s) sur plusieurs tours. Les fils consistent en un fil électriquement conducteur, par exemple en un fil de cuivre et/ou en aluminium, revêtu d'un isolant électrique, tel que de l'émail. Les fils peuvent être de section circulaire, rectangulaire ou en forme de méplat.

Deux bobines 19 sont implantées dans une même encoche 15, chaque bobine 19 étant enroulée autour de l'une des dents 14 délimitant l'encoche par l'intermédiaire d'un isolant de bobine 20. Les bobines 19 sont interconnectées entre elles, par exemple par soudure ou à l'aide d'un interconnecteur 22 pour former une phase U, V, W de la machine qui pourra être du type polyphasé.

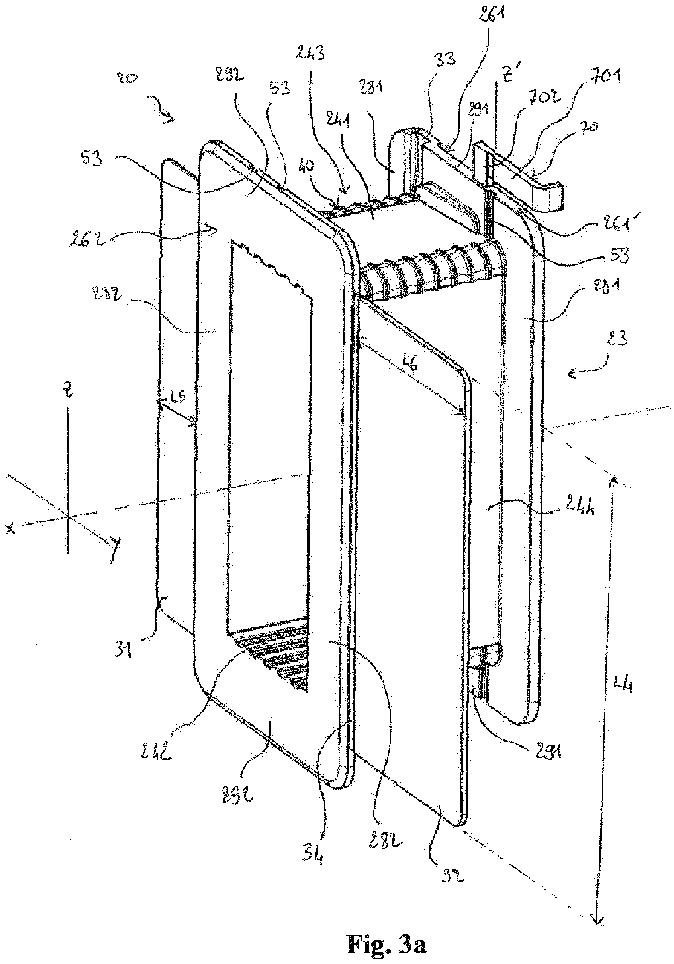

L'isolant de bobine 20 est un isolant électrique réalisé ici en matière électriquement isolante et moulable. Comme bien visible sur la figure 3a, l'isolant 20 a un corps 23 comportant un cadre 24 de forme globalement rectangulaire destiné à être positionné autour d'une dent 14 afin d'isoler électriquement la bobine 19 par rapport à la dent 14 métallique. Ce cadre 24 est formé par une paroi supérieure 241 et une paroi inférieure 242 sensiblement perpendiculaire à l'axe Δ et deux parois latérales 243 et 244 reliant les parois supérieure 241 et inférieure 242 entre elles. Les parois latérales 243 et 244 sont parallèles à l'axe Δ du stator 11.

Les parois supérieure 241 et inférieure 242 sont plus épaisses que les parois latérales 243, 244 afin de soutenir efficacement la bobine sans se déchirer, comme cela ressort clairement de la figure 7. Les parois latérales 243, 244 sont suffisamment fines pour permettre un bon transfert de chaleur entre la bobine 19 et la dent 14.

Le corps 23 de l'isolant comporte en outre un rebord avant 261 et un rebord arrière 262 définissant avec les parois 241-244 du cadre une gorge de montage de la bobine 19. Le rebord arrière 262 est destiné à être positionné à proximité de la culasse 17 tandis que le rebord avant 261 est situé du côté de l'extrémité libre d'une dent 14, c'est-à-dire du côté de la périphérie externe du rotor (non représenté). Le corps 23 est réalisé ici en matière électriquement isolante rigide par exemple en matière plastique telle que du PA 6.6, qui pourra être renforcé par des fibres, telles que des fibres de verre.

Chaque rebord 261, 262 comporte deux bordures longitudinales référencées 281 pour le rebord avant 261 et 282 pour le rebord arrière 262. Ces bordures longitudinales 281 et 282 forment avec les parois latérales 243 et 244 la partie de la gorge recevant les côtés d'un bobinage.

Chaque rebord 261, 262 comporte également deux bordures transversales référencées 291 pour le rebord avant 261 et 292 pour le rebord arrière 262 reliant entre elles les bordures longitudinales 281, 282 de chaque rebord 261, 262. Ces bordures transversales 291, 292 forment avec les parois supérieure 241 et inférieure 242 la partie de la gorge recevant les extrémités des bobinages dépassant axialement suivant l'axe Δ de part et d'autre d'une dent 14 appelées chignons.

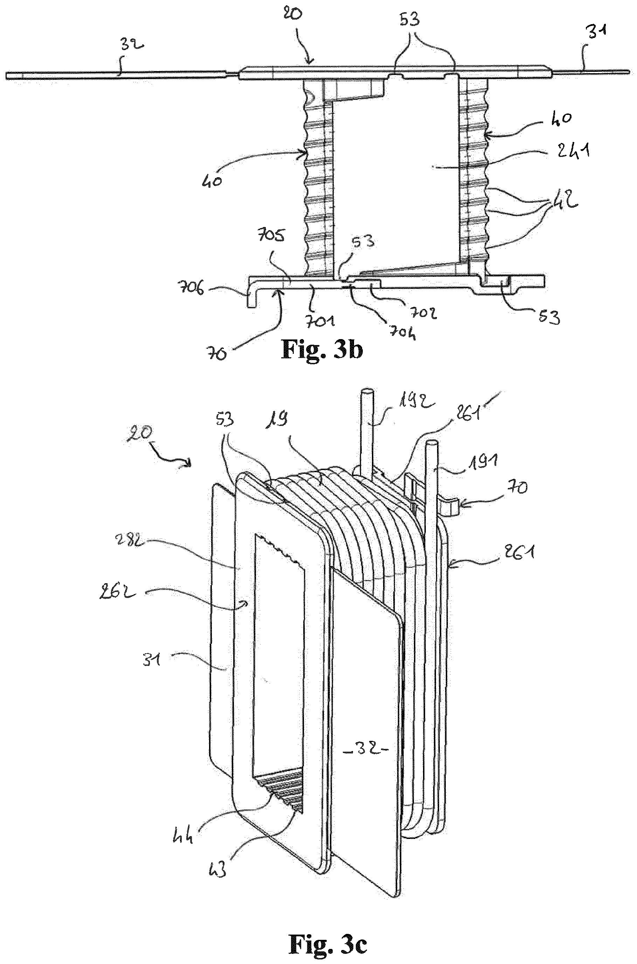

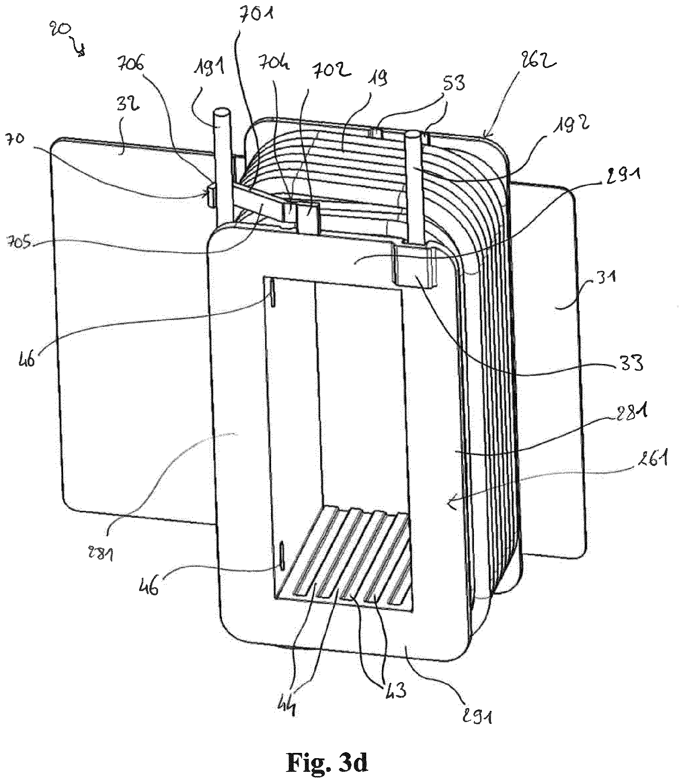

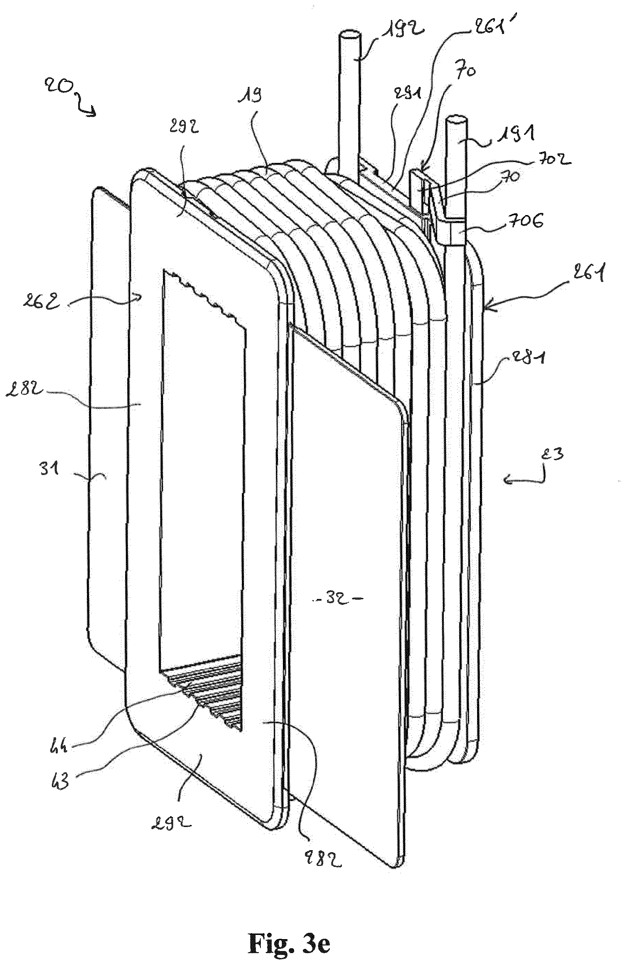

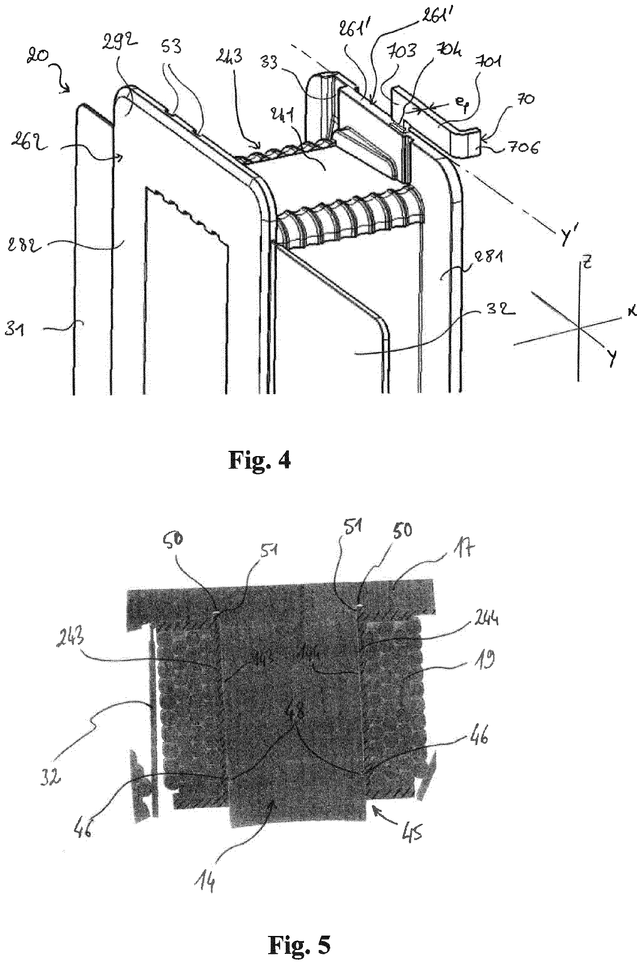

Dans le mode de réalisation illustré figures 3a-3e, l'isolant 20 comprend un dispositif de fixation 70 d'une extrémité 191 du fil, ce dispositif de fixation 70 comprenant une patte de fixation 701 solidaire du rebord avant 261, la patte de fixation étant mobile élastiquement par rapport à ce rebord avant 261 entre une position au repos, illustrée figures 3a, 3b, 3c et 4, et une position de fixation, illustrée figures 3d et 3e, la position de fixation correspondant à une position dans laquelle la patte de fixation 701 est en contact et en appui contre ladite extrémité 191 du fil alors maintenue entre la patte de fixation 701 et ledit rebord avant 261 portant le dispositif de fixation 70.

Le rebord avant 261, portant le dispositif de fixation 70, est le rebord situé du côté de l'extrémité libre d'une dent 14. Dans cette configuration, les extrémités 191, 192 du fil de bobine sont amenées de manière simple jusqu'à leur connexion avec l'interconnecteur 22 et les dispositif de fixation 70 permettent de les maintenir fixes pour faciliter, d'une part, l'opération de montage du bobinage sur la dent qui le reçoit en maintenant le fil enroulé de manière serrée sur l'isolant, sans relâchement possible dudit bobinage, et d'autre part, l'opération de soudage des extrémités 191, 192 des fils des bobines 19 au connecteur 22.

Pour la suite de la description, est défini un trièdre orthonormal de référence (X, Y, Z), l'axe (X) étant défini comme l'axe d'enroulement autour duquel le fil de bobine est enroulé, cet axe d'enroulement (X) étant radial à l'axe Δ du stator 11 et l'axe (Z) étant un axe parallèle à l'axe Δ du stator 11 lorsque l'isolant est monté.

Dans le mode de réalisation illustré figures 3a-3e, la patte de fixation 701 est mobile élastiquement en rotation par rapport au rebord avant 261 autour d'un axe de rotation (Z') parallèle à l'axe (Z) orthogonal à l'axe d'enroulement (X). Le rebord avant 261 portant le dispositif de fixation 70 présente un bord extérieur 261' à partir duquel une saillie 702 s'étend vers le haut, la patte de fixation 701 étant solidaire de la saillie 702 et mobile élastiquement en rotation par rapport à cette saillie 702 autour de cet axe (Z'). La patte de fixation 701 est ici perpendiculaire à la saillie 702.

Dans le mode de réalisation alternatif illustré figure 4, la patte de fixation 701 est mobile élastiquement en rotation par rapport au rebord avant 261 autour d'un axe de rotation (Y') parallèle à l'un des axes (Y) orthogonal à l'axe d'enroulement (X). La patte de fixation 701 présente une base 703 solidaire du bord extérieur 261' du rebord avant 261 portant le dispositif de fixation 70, la patte de fixation 701 étant mobile élastiquement par rapport audit rebord avant 261 autour de cet axe (Y').

Quelque soit le mode de réalisation envisagé, la rotation élastique peut être effectuée par l'intermédiaire d'une zone 704 de plus faible épaisseur que l'épaisseur eₚ de la patte de fixation 701. Par exemple, un tel voile de matière plastique peut être formé durant une étape de moulage de l'isolant.

Comme illustré figure 3a-3e et 4, le dispositif de fixation 70 est solidaire du rebord avant 261 au niveau de sa bordure transversale 291. II s'agit en particulier ici de la bordure transversale 291 située au voisinage du connecteur 22 de sorte à ce que l'opération de soudage des extrémités 191, 192 des fils des bobines 19 au connecteur 22 soit facilitée.

Plus précisément, et comme illustré figure 3d, la patte de fixation 701 est solidaire de la bordure transversale 291 du rebord avant 261 et permet la fixation de l'extrémité 191 du fil de bobine au voisinage d'une extrémité de l'une des bordures longitudinales 281 adjacentes. Ceci permet notamment de maintenir fixe l'extrémité du fil lorsque celui-ci se prolonge axialement suivant l'axe Δ.

Pour sécuriser la fixation de l'extrémité 191 du fil dans la position de fixation, c'est-à-dire entre la patte de fixation 701 et ledit rebord avant 261 portant la patte de fixation 701, ladite patte de fixation 701 présente un corps 705 comportant, à son extrémité distale 706, une partie recourbée (voir figure 3b).

La partir recourbée est sensiblement orthogonale par rapport au corps 705 de la patte de fixation 701 et est ici orientée dans une direction opposée au bobinage, la partie recourbée délimitant une forme concave dans laquelle vient se loger le fil et formant une butée pour l'extrémité du fil qui, par sa rigidité, exercerait une contrainte mécanique l'entrainant hors du bobinage 19.

De préférence, comme cela est représenté sur les figures 3a-3e et 4 l'autre des bordures longitudinales 281 adjacentes à la bordure transversale 291 est configurée à une de son extrémité 33 pour servir de guide fil pour l'autre 192 des fils de sortie 191, 192 de la bobine 19. A cet effet, les bordures longitudinales 281 présentent à une extrémité 33 la forme d'une cuvette recevant une extrémité 192 du fil de la bobine 19.

Dans un mode de réalisation alternatif, une telle extrémité 33 en forme de cuvette est avantageusement remplacée par un deuxième dispositif de fixation 70, lequel assure une fixation améliorée de l'extrémité 192 du fil à l'isolant 20. Dans ce cas, les deux dispositifs de fixations 70 sont alors situés sur le même rebord avant 261, c'est-à-dire le rebord situé du côté de la périphérie externe du rotor, et permettent d'assujettir le fil de chaque côté de l'isolant.

Ceci est d'autant plus avantageux dans le cas particulier où le stator, ou le rotor, de la machine électrique comporte une pluralité de phases reliées entre elles, et, que des bobines d'une même phase sont connectées entre elles par au moins un fil de bobine continu. Dans une telle configuration, l'isolant peut assujettir chaque fil d'une même phase au moyen de ces deux dispositifs de fixation par isolant de bobine.

En effet, bien qu'une extrémité 33 en forme de cuvette puisse guider sensiblement l'extrémité du fil, celle-ci ne peut pas l'assujettir de manière efficace notamment lorsque le fil présente un diamètre important le rendant plus rigide. Dans le cas où cette extrémité 33 en forme de cuvette est remplacée par un dispositif de fixation, quelque soit les caractéristiques intrinsèques du fil de bobinage, celui-ci sera assujetti et maintenu fixe efficacement.

Le rotor, ou le stator, présentant des bobines d'une même phase connectées entre elles par au moins un fil de bobine continu sans interconnecteur 22, et pour éviter que des fils continus de phases différentes s'entremêlent entre eux, les deux dispositifs de fixation 70 sont disposés à une même hauteur. Cette hauteur peut notamment varier en fonction, soit de la hauteur de la saillie 702 qui s'étend du bord extérieur 261' vers le haut, soit de la hauteur de la base 703 à partir du bord extérieur 261'. La hauteur étant ici la distance suivant l'axe du rotor Δ séparant la paroi supérieure 241 et la patte de fixation 701.

Une des bordures longitudinales 282 du rebord arrière 262 est prolongée par un talon 31; tandis que l'autre bordure longitudinale 282 du rebord arrière 262 est prolongée par une ailette 32 via une zone 34 de raccordement entre l'ailette 32 et le rebord arrière 262. Cette zone 34 de raccordement présente une épaisseur inférieure à l'épaisseur du rebord arrière 262 de manière à constituer une zone de pliage. L'ailette 32 est ainsi pliable en direction du corps 23 de l'isolant de bobine suivant la zone 34 de pliage qui s'étend longitudinalement perpendiculairement aux parois supérieure 241 et inférieure 242. Une fois pliée, l'ailette 32 constitue un mur électriquement isolant entre deux bobines 19 successives.

Dans ce mode de réalisation, l'ailette 32 est destinée à être pliée et laissée libre. Dans ce cas, lorsque les isolants 20 de bobine sont montés sur les dents 14, l'ailette 32 d'un isolant 20 donné prend appui contre un rebord avant 261 d'un isolant de bobine 20 adjacent.

Comme cela est visible sur la figure 2b, le talon 31 est destiné à être plaqué contre un fond d'une encoche 15 du stator 11 constitué par la périphérie interne de la culasse 17 qui s'étend entre deux dents 14 successives. Ce talon 31a pour fonction d'isoler efficacement les bobines 19 de la culasse 17, ce qui permet de limiter la perte de tension des bobines 19. A cet effet, le talon 31 présente une longueur correspondant à l'épaisseur de la culasse 17 et une largeur correspondant à la distance entre deux dents 14 adjacentes successives.

De manière optionnelle, comme cela est visible sur les figures 3a et 3b, le cadre 24 comporte des portions 40 de forme arrondies au niveau des angles entre les parois 241-244 du cadre 24 présentant en surface des empreintes 42 pour faciliter l'enroulement du fil de la bobine 19. Dans une réalisation, ces empreintes 42, qui coopèrent chacune avec un enroulement du fil, présentent une direction d'extension légèrement inclinée par rapport aux rebords avant 261 et arrière 262 suivant la forme de l'enroulement afin d'optimiser le remplissage des encoches 15 du stator 11.

Par ailleurs, comme cela est particulièrement bien visible sur les figures 3a, 3b et 3c et afin de permettre le passage d'un vernis d'imprégnation entre l'isolant 20 et la dent 14 pour la fixation de ces deux éléments 14 et 20 entre eux, des rainures borgnes 43 sont ménagées dans les faces des parois supérieure 241 et inférieure 242 du cadre 24 en regard l'une de l'autre tournées vers l'intérieur de l'isolant 20, c'est-à-dire tournées respectivement vers les faces externes supérieure 141 et inférieure 142 de la dent 14. Ces rainures 43 s'étendent sensiblement perpendiculairement aux rebords avant 261 et arrière 262. Ces rainures 43 sont fermées, c'est-à dire non débouchantes, du côté du rebord avant 261 afin d'éviter que le vernis d'imprégnation coule dans la partie intérieure de la machine au niveau de l'entrefer entre le rotor et le stator de celle-ci lorsque le verni est injecté depuis l'extrémité ouverte des rainures 43 située du côté de la culasse 17. Les faces internes des parois supérieure 241 et inférieure 242 présentent ainsi une alternance de rainures 43 et de nervures 44 situées entre deux rainures 43 successives. En l'occurrence, l'isolant de bobine 20 comporte cinq rainures 43 et quatre nervures 44 sur les faces internes des parois 241, 242.Les rainures 43 des parois 241, 242 sont espacées les unes des autres de sorte qu'elle ne soient pas bouchées par la culasse 17 comme visible à la figure 2b dans laquelle les rainures 43 sont visibles mais non référencées.

Pour garantir un maintien efficace de la bobine 19 sur la dent 14 lors de l'injection du vernis d'imprégnation à l'intérieur des rainures 43, un système d'accrochage 45 montré sur la figure 5 assure une fixation de l'isolant 20 de bobine sur la dent 14. Ce système d'accrochage 45 est formé par des ergots 46 d'accrochage et des rainures 48 de faible profondeur appelées "piquage" ménagées dans la dent 14 pour l'encliquetage des ergots 45. Plus précisément, ces ergots 46 sont portés par des faces des parois latérales 243 et 244 du cadre 24 tournées vers la dent 14. En l'occurrence, chaque paroi latérale 243, 244 porte sur sa face interne deux ergots 46 d'accrochage (cf. figure 3d). Chaque ensemble de deux ergots 46 est destiné à coopérer par encliquetage avec une rainure 48 réalisée dans la tête de la dent 14. Les dents 14 comporte ainsi deux rainures 48 réalisées dans les extrémités de deux faces latérales 143, 144 de la dent 14 parallèles l'une de l'autre reliant les faces supérieure 141 et inférieure 142 de la dent 14. Ces rainures 48 s'étendent suivant une direction d'extension axiale du stator 11.

Les ergots 46 ainsi que les rainures 48 présentent des sections triangulaires de forme complémentaire. On note que l'épaisseur de chaque ergot 46 ainsi que la profondeur de la rainure 48 correspondante a tendance à diminuer lorsqu'on se déplace de la tête de la dent 14 vers la culasse 17. Lorsque l'isolant 20 est enfilé sur la dent 14, les ergots 46 en appui sur les faces latérales de la dent 14 ont tendance à écarter par déformation élastique les parois latérales 243, 244 du cadre 24 de l'isolant jusqu'à ce que les ergots 46 pénètrent dans les rainures 48. Une fois que les ergots 46 coopèrent avec les rainures 48, un côté de chaque ergot 46 en appui sur un côté de la rainure 48 correspondante a alors tendance à retenir en translation l'isolant 20 sur la dent 14. Cela permet un bon maintien de l'isolant 20 lors des phases de déplacement du stator 11 pour permettre une injection de vernis à l'intérieur des rainures borgnes 43.

En variante ou en complément, les dents 14 présentent en outre des aspérités (non représentées) pour l'accrochage de l'isolant 20.

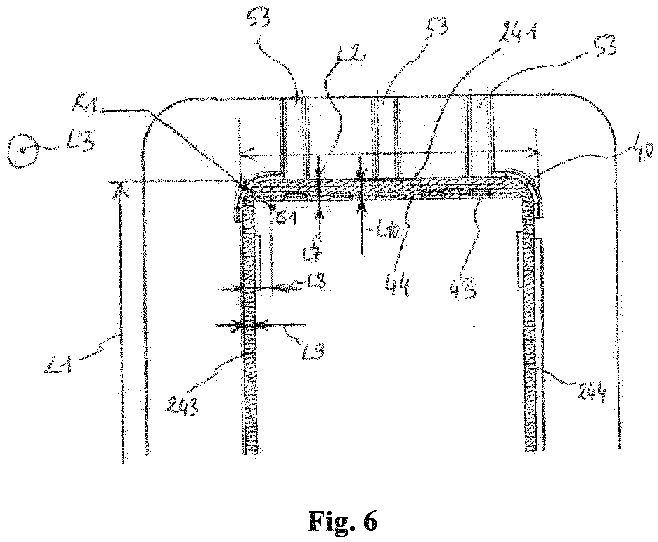

Pour assurer le maintien en position de l'isolant 20 lors de l'opération de soudage des extrémités 191, 192 des fils des bobines 19 à l'interconnecteur 22, le corps 12 du stator comporte également de préférence deux fentes 50 visibles sur la figure 6 situées au niveau du pied de chaque dent 14, c'est-à-dire au niveau de la jonction entre la dent 14 et la culasse 17. Ces fentes 50 sont situées de part et d'autre des faces latérales de la dent 14 pour permettre la pénétration de saillies 51 de l'isolant 20 de bobine. Ces saillies 51 correspondent par exemple à une prolongation des parois latérales 243, 244 au-delà du rebord arrière 262. Les ergots 46 sont positionnés de manière à garantir un engagement des saillies 51 à l'intérieur des fentes 50 lorsque les ergots 46 coopèrent avec les rainures 48. En outre, pour faciliter l'imprégnation des fils des bobines 19, l'isolant 20 présente des rainures 53 ménagées dans les bordures transversales 291, 292 des rebords avant 261 et arrière 262 pour le passage du vernis d'imprégnation au niveau de la bobine 19 (cf. figures 3a-3e, 4, 5). Ces rainures 53 sont ménagées du côté des rebords 261, 262 tournés vers la gorge recevant le fil de bobine. Ces rainures 53 s'entendent sensiblement perpendiculairement à la paroi supérieure 241 et à la paroi inférieure 242. En l'occurrence, l'isolant 20 de bobine comporte deux rainures 53 ménagées dans le rebord arrière 262 et une rainure ménagée dans le rebord avant 261. Le vernis d'imprégnation permet d'avoir un bon contact entre les fils de la bobine 19.

L'isolant 20 peut comporter, de préférence sur son rebord arrière 262 destiné à être positionné à proximité de la culasse 17, des protubérances définissant un passage pour un pion d'indexage de l'interconnecteur 22. Pour faciliter l'insertion des pions d'indexage entre les protubérances, les protubérances sont conformées d'une manière telle que le passage présente une forme légèrement évasée à son extrémité débouchant du côté des extrémités 191, 192 du fil de la bobine 19.

Toutes les formes de l'isolant 20 de bobine précitées sont obtenues de préférence par moulage, l'isolant 20 étant avantageusement en matière moulable et électriquement isolante, telle que de la matière plastique. Toutes les dispositions précitées (rainures 43, système d'accrochage 45, fentes 50, rainures 53, talon 31 etc.) sont applicables au mode de réalisation de la figure 6.

En variante, comme cela est décrit dans le document US2009127969, l'isolant 20 de bobine peut être réalisé en deux parties du fait que l'enroulement de la bobine 19 sur l'isolant 20 de bobine est réalisé sur un outil externe. Ainsi, l'isolant 20 de bobine pourra être réalisé en deux parties séparées entre elles suivant un plan médian transversal perpendiculaire à l'axe X ou suivant un plan médian longitudinal parallèle à l'axe X lorsque l'isolant 20 de bobine est monté sur la dent 14.

Dans un exemple particulier de réalisation montré sur la figure 6, le cadre 24 présente une longueur L1 de l'ordre de 53,6mm, une largeur L2 de l'ordre de 20,75 mm, et une profondeur L3 mesurée suivant une direction perpendiculaire à la feuille de l'ordre de 23,5 mm. Le talon 31 et l'ailette 32 présentent tous les deux une longueur L4 de l'ordre de 58,6 mm et une largeur L5, L6 respectivement de l'ordre de 10,2 mm pour le talon 31 et 29,2 mm pour l'ailette 32 (cf. figure 3a). Les rebords avant 261 et arrière 262 présentent une hauteur par rapport aux parois 241-244 du cadre 24 de l'ordre de 9,7 mm. Dans cette réalisation les bordures longitudinales 282 du rebord arrière 262 sont de largeur différente. Plus précisément la bordure 282 associée à l'ailette 32 présente une largeur de 8 mm et celle associée au talon 31 présente une largeur de 7 mm. Le talon 31 présente une épaisseur de 0,4 mm, tandis que l'ailette présente une épaisseur de 0,8 mm et les bordures longitudinales 282, 281 et transversales 291, 292 une épaisseur de 1, 5 mm.

Comme visible sur la figure 6, les portions 40 arrondies au niveau des angles du cadre 24 présentent un rayon R1 de courbure de l'ordre de 2 mm, le centre C1 du cercle correspondant étant situé à une distance L7 de l'ordre de 2 mm de la paroi supérieure 241 ou inférieure 242 et à une distance L8 de l'ordre de 2 mm de la paroi latérale 243, 244 correspondante.

Les parois latérales 243, 244 ont une épaisseur fine L9 de l'ordre de 0,8mm pour faciliter le transfert de chaleur entre la bobine 19 et la dent 14. Les parois supérieure 241 et inférieure 242 ont une épaisseur L10 de l'ordre de 1,5 mm au niveau d'une nervure 44. La profondeur des rainures borgnes 43 est de l'ordre de 0.5mm. Le fil utilisé pour réaliser les bobines 19 présente par exemple un diamètre de l'ordre de 2 mm.

On décrit ci-après une opération de bobinage du stator 11 selon l'invention.

Dans un premier temps, les isolants 20 de bobine sont positionnés autour d'un outil externe. Le fil est ensuite enroulé autour du cadre 24 et entre les rebords avant 261 et arrière 262 de sorte que les spires coopèrent avec les empreintes 42. Le bobinage est effectué par exemple sur quatre couches d'enroulements superposées les unes sur les autres. Le bobinage est effectué de manière que les chignons des bobines 19 se situent sur les parois supérieure 241 et inférieure 242 et que les côtés des bobines 19 se situent sur les parois latérales 243, 244 de l'isolant.

Au moins l'une des extrémités 191, 192 du fil de chaque bobine 19 est positionnée dans les dispositifs de fixation 70, en position de fixation, de sorte à ce que lesdites extrémités soient pincées entre le rebord avant 261 portant le dispositif de fixation et la patte de fixation 701. Si des extrémités 33 de bordures longitudinales présentent des cuvettes, les extrémités 192 associées des fils de bobinage y sont également logées.

Chaque isolant 20 de bobine est ensuite retiré de l'outil puis enfilé autour d'une dent 14 du stator 11 jusqu'à ce que les ergots 46 d'accrochage coopèrent avec les piquages 48 ménagés dans le stator et que les saillies 51 de l'isolant pénètrent à l'intérieur des fentes 50 situées au pied de la dent 14.

Le talon 31 de chaque dent 14 est alors positionné de manière à être plaqué contre la périphérie interne de la culasse 17 s'étendant entre deux dents 14 successives. L'ailette 32 est rabattue vers le bobinage de manière à constituer un mur électriquement isolant entre deux bobines 19 adjacentes. La figure 2b montre ainsi des isolants de bobine dont l'ailette 3 qui est libre est maintenue repliée par un rebord avant 261 d'un isolant 20 adjacent. S'il y a lieu, en variante, l'ailette 32 pourra être maintenue en position rabattue au moyen de systèmes d'encliquetage (non illustré).

On effectue ensuite une opération d'imprégnation du bobinage du stator 11 par un vernis d'imprégnation. A cette fin, le stator 11 est chauffé ainsi que le vernis pour être introduit à l'état liquide goutte à goutte dans les rainures borgne 43. Le côté fermé des rainures borgnes 43 situé de la périphérie externe du rotor permet d'éviter que le vernis s'écoule à l'intérieur de la machine. Le passage du vernis entre les faces internes de l'isolant 20 et les faces externes de la dent 14 permet de fixer efficacement l'isolant 20 de bobine sur la dent 14. On introduit également du vernis à l'intérieur des rainures 53 réalisées dans les bordures transversales des rebords 261, 262 de manière à imprégner et maintenir ensemble les fils des bobines 19. On notera que les rainures 43 des parois 241, 242 sont éloignées les unes des autres en fonction de l'épaisseur de la culasse 17. Ces rainures 43, non référencées à la figure 2b, ne sont pas masquées par la culasse 17.

En variante l'opération d'imprégnation pourra être réalisée par trempage partiel et roulage du stator dans un bain de vernis d'imprégnation. En variante l'opération d'imprégnation pourra être réalisée sous vide ou par trempage simple complet du stator dans un bain de vernis d'imprégnation.

On note que l'accrochage de l'isolant 20 sur la dent 14 via le système formé par les ergots 46 et les rainures 48 de piquage permet de garantir un positionnement précis de l'isolant 20 sur la dent 14 lors la phase d'imprégnation qui implique un déplacement du stator 11 afin de pouvoir positionner les différentes bobines 19 en face de l'outil applicateur de vernis d'imprégnation. Ensuite, le verni est refroidi en se polymérisant. Le vernis est par exemple à base de résine époxy, de résine polyester non saturée ou de résine silicone. Bien entendu, de manière connue, on peut ajouter aux résines des accélérateurs pour diminuer la durée de l'imprégnation

Une fois la phase d'imprégnation du bobinage du stator 11 terminée, le connecteur 22 externe est ensuite positionné au-dessus des bobines 19 pour assurer une connexion des bobines 19 entre elles suivant une configuration particulière comme cela est montré sur la figure 2b. Ce connecteur 22 est positionné de sorte que ses pieds 61 reposent sur un rebord de la culasse 17 et que ses pions d'indexage s'insèrent entre les protubérances. Les extrémités 191, 192 des fils des bobines 19, assujettis pour tout ou partie par les dispositifs de fixations 70, sont ensuite soudées à des pattes 62 de soudage appartenant à l'interconnecteur 22 au moyen d'une électrode de soudage. L'interconnecteur 22 est ainsi maintenu en position contre le rebord d'extrémité de la culasse 17.

L'ensemble est ensuite positionné à l'intérieur d'un boîtier par frettage, ce boîtier pouvant par exemple être refroidi par eau.

Les ailettes 32 constituent ici un mur électriquement isolant entre deux bobines 19 consécutives. En outre ces ailettes 32 sont issues de l'isolant 20, ici en matière plastique moulable, en sorte que la fabrication de l'isolant 20, avantageusement équipé d'un talon 31, est aisée. Le montage de l'isolant 20 sur sa dent associée 14 et le soudage des extrémités 191, 192 est également aisé grâce à la configuration de l'isolant 20 configuré pour assujettir les extrémités 191, 192 de la bobine 19 par l'intermédiaire des pattes de fixations 701 des dispositifs de fixation 70. Le vernis d'imprégnation permet une bonne fixation de la bobine sur sa dent 14 associée grâce aux rainures 43, qui sont borgnes pour éviter de polluer l'entrefer entre le stator et le rotor de la machine électrique. Cette fixation est facilitée grâce au système d'accrochage 45. Plus précisément la culasse 17 est dans cet exemple de réalisation de forme annulaire et constitue un support pour les dents 14 s'étendant vers l'intérieur en direction de l'axe X. Les dents 14 sont réparties circonférentiellement de manière régulière et de manière connue un entrefer existe entre les extrémités libres des dents 14 et la périphérie externe du rotor de la machine électrique tournante. Cet entrefer ne sera pas pollué par le vernis d'imprégnation. On notera que le système d'accrochage 45 facilite l'imprégnation et que les rainures 50 facilitent l'opération de soudage. Les talons 31 permettent d'augmenter la puissance de la machine électrique. Les ailettes 32 permettent d'augmenter également la puissance de la machine électrique tout en rendant celle-ci plus fiable et compacte.

Le rotor de la machine électrique pourra être un rotor à griffes comme dans le document FR 2 890 798. En variante le rotor pourra être à pôles saillants. En variante le rotor pourra être un rotor à aimants permanents comme dans les documents EP 0 803 962 et EP 0 831 580 précités. En variante le rotor à griffes ou à pôles saillants pourra comporter également des aimants permanents. En variante les dents 14 pourront ne pas être réparties circonférentiellement de manière régulière.

Les ailettes 32 et les talons 31 sont moins épais que les bordures 281, 282, 291, 292 des rebords 261, 262, le talon 31 étant d'épaisseur moindre que l'ailette 32. On notera que l'interconnecteur 22 comporte un corps de forme annulaire en matière électriquement isolante, ici doté de pieds 61, dans lequel sont noyé des pistes électriquement conductrices en forme d'anneau, par exemple en cuivre. Chaque piste de l'interconnecteur 22 est dotée de pattes 62 de soudage pour être soudée aux extrémités 191, 192 des bobines 19. Dans ce mode de réalisation les pistes sont empilées les unes sur les autres et il est prévu quatre pistes, l'une des pistes constituant le point neutre d'un montage en étoile des phases de la machine électrique tournante ici du type triphasé. On notera que la piste constituant le point neutre comporte un nombre de pattes 62 égal au nombre de bobines 19 et supérieur au nombre de pattes 62 des autres pistes isolées les unes des autres par la matière électriquement isolante, telle que de la matière plastique, du corps de l'interconnecteur 22, les pattes 62 de soudage étant apparentes. Bien entendu le nombre de pistes dépend des applications, cinq pistes où six pistes pourront être prévues pour une machine électrique respectivement à quatre ou cinq phases. On notera que la localisation des extrémités 191, 192 permet d'allonger la longueur des pattes de soudage 62 ce qui facilite le passage des électrodes de soudage.

L'homme du métier pourra bien entendu modifier la configuration de l'isolant 20 de bobine ainsi que son application sans sortir du cadre de l'invention. Ainsi, l'invention s'applique ici à un stator 11 mais pourrait également s'appliquer à un rotor d'une machine électrique tournante. En effet, tout comme le stator 11, le rotor comporte une culasse et des dents issues de la culasse. Dans le cas du stator 11, la culasse 17 constitue la périphérie externe du corps du stator. Dans le cas du rotor, la culasse constitue la périphérie interne du corps du rotor. Dans les deux cas, l'isolant 20 de bobine peut être positionné autour d'une dent du rotor ou du stator.

En variante, l'isolant 20 de bobine comporte également d'autres ailettes issues d'au moins une des bordures transversales des rebords 261, 262 afin de couvrir les chignons des bobines 19 portés par les parois supérieure 241 et inférieure 242.

On note que les termes "inférieur" et "supérieur" sont entendus par rapport à un isolant 20 de bobine reposant sur un support plat, les parois latérales 243, 244 étant perpendiculaires au support. La paroi inférieure 242 est la paroi la plus proche du support tandis que la paroi supérieure 241 est la paroi la plus éloignée du support, comme cela est représenté sur la figure 3a. Les faces "internes" des parois 241-244 sont tournées vers l'intérieur du cadre 24; tandis que les faces "externes" des parois 241-244 sont tournées vers l'extérieur du cadre 24.

II est à noter que le talon 31 pourra se raccorder à la bordure longitudinale 282 du bord arrière 262 par une zone de pliage d'épaisseur réduite du type de la zone 34.

Le connecteur 22 peut avoir une autre forme, les pistes pouvant être concentrique.

La machine électrique tournante peut être dotée d'un générateur de courant inversé comme décrit dans le document FR 2 918 512. Dans ce cas le rotor induit de ce générateur pourra comporter une culasse et des dents pour, de manière précitée, montage des isolants de bobines selon l'invention. II en est de même du rotor 4' de la figure 16 de ce document alimenté par le rotor induit du générateur de courant inversé.

La machine électrique tournante pourra appartenir à un véhicule automobile et être de manière précitée un alternateur, un alterno-démarreur qui est un alternateur réversible, un moteur électrique ou un ralentisseur électromagnétique.

Dans le cadre d'un alternateur appartenant à un prolongateur d'autonomie d'un véhicule électrique (Range-extender en Anglais) le rotor pourra être un rotor à aimants permanents avec plusieurs aimants par logement soumis à l'action d'un ressort comme décrit dans la demande FR 12/54733 déposée le 24/05/2012.

## Revendications

1. Isolant (20) de bobine, destiné notamment à être positionné autour d'une dent (14) d'un stator ou d'un rotor d'une machine électrique, cet isolant (20) de bobine ayant un corps (23) comportant des parois (241-244) formant un cadre (24) ainsi qu'un rebord avant (261) et un rebord arrière (262) définissant avec les parois (241-244) du cadre (24) une gorge de montage d'un enroulement d'un fil de bobine (19) autour d'un axe d'enroulement (x), l'isolant (20) comprenant au moins un dispositif de fixation (70) d'une extrémité (191, 192) du fil et en ce que le dispositif de fixation (70) comprend une patte de fixation (701) **caractérisé en ce que** la patte de fixation est solidaire de l'un (261) des rebords (261, 262), la patte de fixation (701) étant mobile élastiquement par rapport à ce rebord (261) entre une position au repos et une position de fixation, la position de fixation correspondant à une position dans laquelle la patte de fixation (701) est en contact et en appui contre ladite extrémité (191, 192) du fil alors maintenue entre la patte de fixation (701) et ledit rebord (261) portant le dispositif de fixation (70).

2. Isolant (20) de bobine selon la revendication 1, **caractérisé en ce que** la patte de fixation (701) est mobile élastiquement en rotation par rapport à ce rebord (261) autour d'un axe de rotation (y', z') parallèle à l'un des axes (y, z) orthogonaux à l'axe d'enroulement (x).

3. Isolant (20) de bobine selon l'une quelconque des revendications 1 et 2, **caractérisé en ce que** le rebord (261) portant le dispositif de fixation présente un bord extérieur (261') à partir duquel une saillie (702) s'étend vers l'extérieur, la patte de fixation (701) étant solidaire de la saillie (702) et mobile élastiquement en rotation par rapport à cette saillie (702) autour de l'axe (z') parallèle à l'axe (z) orthogonal à l'axe de référence (x).

4. Isolant (20) de bobine selon l'une quelconque des revendications 1 et 2, **caractérisé en ce que** la patte de fixation (701) présente une base (703) solidaire d'un bord extérieur (261') du rebord (261) portant le dispositif de fixation (70), la patte de fixation (701) étant mobile élastiquement par rapport audit rebord (261) autour de l'axe (y') parallèle l'axe (y) orthogonal à l'axe d'enroulement (x).

5. Isolant (20) de bobine selon l'une quelconque des revendications 2 à 3, **caractérisé en ce que**, la patte de fixation (701) présente une épaisseur (eₚ), la rotation élastique de la patte de fixation (701) étant effectuée au moyen d'une zone (704) de plus faible épaisseur que ladite épaisseur (eₚ) de la patte de fixation (701).

6. Isolant (20) de bobine selon l'une quelconque des revendications précédentes, **caractérisé en ce que** les rebords avant (261) et arrière (262) présentent chacun deux bordures longitudinales (281, 282) et deux bordures transversales (291, 292), et **en ce que** le dispositif de fixation (70) est solidaire de l'un (261) des rebords (261, 262) au niveau de sa bordure transversale (291).

7. Isolant (20) de bobine selon l'une quelconque des revendications précédentes, **caractérisé en ce qu'**il comprend deux dispositifs de fixation (70), situés chacun sur le même rebord (261).

8. Isolant (20) de bobine selon la revendication 7, **caractérisé en ce que** les deux dispositifs de fixation (70) sont disposés à une même hauteur.

9. Isolant (20) de bobine selon l'une quelconque des revendications 1 à 8, **caractérisé en ce que** la patte de fixation (701) présente un corps (705) comportant, à son extrémité distale (706), une partie recourbée.

10. Isolant (20) de bobine selon l'une quelconque des revendications 1 à 9, **caractérisé en ce que** la patte de fixation (701) est moulée monobloc avec le rebord (261) associé.

11. Stator ou rotor de machine électrique comportant des dents (14) issues d'une culasse (17) autour desquelles est positionné un isolant (20) de bobine selon l'une quelconque des revendications précédentes portant une bobine.

12. Stator ou rotor de machine électrique selon la revendication 11, **caractérisé en ce qu'**il comporte n phases, des bobines d'une même phase étant connectées entre elles par au moins un fil de bobine continu, chaque fil d'une même phase étant maintenu par deux dispositifs de fixation (70) à chaque isolant (20) de bobine.

13. Stator ou rotor de machine électrique selon la revendication 12, **caractérisé en ce que** les dispositifs de fixation (70) du fil d'une même phase sont à une hauteur (hₙ), la hauteur (hₙ) étant différente pour chacune des n phases.

## Patentansprüche

1. Spulenisolierung (20), die insbesondere dafür bestimmt ist, um einen Zahn (14) eines Stators oder eines Rotors einer elektrischen Maschine angeordnet zu werden, wobei diese Spulenisolierung (20) einen Körper (23), der Wände (241-244) aufweist, die einen Rahmen (24) bilden, und eine Vorderkante (261) und eine Hinterkante (262) aufweist, die mit den Wänden (241-244) des Rahmens (24) eine Montagekehle einer Aufwicklung eines Spulendrahts (19) um eine Wickelachse (x) bilden, wobei die Isolierung (20) mindestens eine Befestigungsvorrichtung (70) von einem Ende (191, 192) des Drahtes aufweist, und dass die Befestigungsvorrichtung (70) eine Befestigungslasche (701) aufweist, **dadurch gekennzeichnet, dass** die Befestigungslasche mit einer (261) der Kanten (261, 262) fest verbunden ist, wobei die Befestigungslasche (701) gegenüber dieser Kante (261) zwischen einer Ruheposition und einer Befestigungsposition elastisch beweglich ist, wobei die Befestigungsposition einer Position entspricht, in der die Befestigungslasche (701) in Kontakt mit und in Anlage an dem Ende (191, 192) des Drahtes ist, der dann zwischen der Befestigungslasche (701) und der Kante (261) gehalten wird, die die Befestigungsvorrichtung (70) trägt.

2. Spulenisolierung (20) nach Anspruch 1, **dadurch gekennzeichnet, dass** die Befestigungslasche (701) in Drehung gegenüber dieser Kante (261) um eine Drehachse (y', z') elastisch beweglich ist, die zu einer der Achsen (y, z) parallel ist, die zu der Wickelachse (x) orthogonal sind.

3. Spulenisolierung (20) nach einem der Ansprüche 1 und 2, **dadurch gekennzeichnet, dass** die Kante (261), die die Befestigungsvorrichtung trägt, einen Außenrand (261') aufweist, ab dem sich ein Vorsprung (702) nach außen erstreckt, wobei die Befestigungslasche (701) mit dem Vorsprung (702) fest verbunden ist und in Drehung gegenüber diesem Vorsprung (702) um die Achse (z'), die parallel zu der Achse (z) ist, die orthogonal zu der Referenzachse (x) ist, elastisch beweglich ist.

4. Spulenisolierung (20) nach einem der Ansprüche 1 und 2, **dadurch gekennzeichnet, dass** die Befestigungslasche (701), eine Basis (703) aufweist, die mit einem Außenrand (261') der Kante (261), die die Befestigungslasche (70) trägt, fest verbunden ist, wobei die Befestigungslasche (701) gegenüber dieser Kante (261) um die Achse (y'), die parallel zu der Achse (y) ist, die orthogonal zu der Wickelachse (x) ist, elastisch beweglich ist.

5. Spulenisolierung (20) nach einem der Ansprüche 2 bis 3, **dadurch gekennzeichnet, dass** die Befestigungslasche (701) eine Dicke (eₚ) aufweist, wobei die elastische Drehung der Befestigungslasche (701) mittels eines Bereiches (704) von geringerer Dicke als der Dicke (eₚ) der Befestigungslasche (701) durchgeführt wird.

6. Spulenisolierung (20) nach einem der vorhergehenden Ansprüche, **dadurch gekennzeichnet, dass** die Vorderkante (261) und die Hinterkante (262) jeweils zwei Längskanten (281, 282) und zwei Querkanten (291, 292) aufweisen, und dass die Befestigungsvorrichtung (70) mit einer (261) dieser Kanten (261, 262) an ihrer Querkante (291) fest verbunden ist.

7. Spulenisolierung (20) nach einem der vorhergehenden Ansprüche, **dadurch gekennzeichnet, dass** sie zwei Befestigungsvorrichtungen (70) aufweist, die jeweils auf der gleichen Kante (261) angeordnet sind.

8. Spulenisolierung (20) nach Anspruch 7, **dadurch gekennzeichnet, dass** die zwei Befestigungsvorrichtungen (70) auf einer gleichen Höhe angeordnet sind.

9. Spulenisolierung (20) nach einem der Ansprüche 1 bis 8, **dadurch gekennzeichnet, dass** die Befestigungslasche (701) einen Körper (705) aufweist, der an seinem distalen Ende (706) einen gebogenen Teil aufweist.

10. Spulenisolierung (20) nach einem der Ansprüche 1 bis 9, **dadurch gekennzeichnet, dass** die Befestigungslasche (701) einteilig mit der zugeordneten Kante (261) geformt ist.

11. Stator oder Rotor einer elektrischen Maschine, umfassend Zähne (14), die aus einem Zylinderkopf (17) hervorgehen, um die eine Spulenisolierung (20) nach einem der vorhergehenden Ansprüche angeordnet ist, die eine Spule trägt.

12. Stator oder Rotor einer elektrischen Maschine nach Anspruch 11, **dadurch gekennzeichnet, dass** er n Phasen aufweist, wobei Spulen einer gleichen Phase durch mindestens einen Endlosspulendraht miteinander verbunden sind, wobei jeder Draht einer gleichen Phase durch zwei Befestigungsvorrichtungen (70) an jeder Spulenisolierung (20) gehalten wird.

13. Stator oder Rotor einer elektrischen Maschine nach Anspruch 12, **dadurch gekennzeichnet, dass** die Befestigungsvorrichtungen (70) des Drahtes einer gleichen Phase auf einer Höhe (hₙ) sind, wobei die Höhe (hₙ) für jede der n Phasen unterschiedlich ist.

## Claims

1. Coil insulator (20), intended in particular to be positioned around a tooth (14) of a stator or of a rotor of an electric machine, this coil insulator (20) having a body (23) including walls (241-244) forming a frame (24) along with a front rim (261) and a back rim (262) defining, with the walls (241-244) of the frame (24), a groove for mounting a winding of a coil wire (19) around a winding axis (x), the insulator (20) comprising at least one device (70) for fastening one end (191, 192) of the wire and in that the fastening device (70) comprises a fastening tab (701) **characterized in that** the fastening tab is rigidly connected to one (261) of the rims (261, 262), the fastening tab (701) being elastically movable with respect to this rim (261) between a rest position and a fastening position, the fastening position corresponding to a position in which the fastening tab (701) makes contact with and bears against said end (191, 192) of the wire, which end is then held between the fastening tab (701) and said rim (261) bearing the fastening device (70).

2. Coil insulator (20) according to Claim 1, **characterized in that** the fastening tab (701) is elastically rotatably movable with respect to this rim (261) about an axis of rotation (y', z') that is parallel to one of the axes (y, z) that are orthogonal to the winding axis (x).

3. Coil insulator (20) according to either of Claims 1 and 2, **characterized in that** the rim (261) bearing the fastening device has an outer edge (261') from which a protrusion (702) extends outwards, the fastening tab (701) being rigidly connected to the protrusion (702) and elastically rotatably movable with respect to this protrusion (702) about the axis (z') that is parallel to the access (z) that is orthogonal to the reference axis (x).

4. Coil insulator (20) according to either of Claims 1 and 2, **characterized in that** the fastening tab (701) has a base (703) that is rigidly connected to an outer edge (261') of the rim (261) bearing the fastening device (70), the fastening tab (701) being elastically movable with respect to said rim (261) about the axis (y') that is parallel to the axis (y) that is orthogonal to the winding axis (x) .

5. Coil insulator (20) according to either of Claims 2 and 3, **characterized in that** the fastening tab (701) has a thickness (eₚ), the elastic rotation of the fastening tab (701) being carried out by means of a zone (704) of lower thickness than said thickness (eₚ) of the fastening tab (701).

6. Coil insulator (20) according to any one of the preceding claims, **characterized in that** the front (261) and back (262) rims each have two longitudinal borders (281, 282) and two transverse borders (291, 292), and **in that** the fastening device (70) is rigidly connected to one (261) of the rims (261, 262) at its transverse border (291).

7. Coil insulator (20) according to any one of the preceding claims, **characterized in that** it comprises two fastening devices (70), each located on the same rim (261).

8. Coil insulator (20) according to Claim 7, **characterized in that** the two fastening devices (70) are positioned at one and the same height.

9. Coil insulator (20) according to any one of Claims 1 to 8, **characterized in that** the fastening tab (701) has a body (705) including, at its distal end (706), a bent portion.

10. Coil insulator (20) according to any one of Claims 1 to 9, **characterized in that** the fastening tab (701) is moulded as an integral part of the associated rim (261).

11. Electric machine stator or rotor including teeth (14) arising from a yoke (17) around which a coil insulator (20) according to any one of the preceding claims, bearing a coil, is positioned.

12. Electric machine stator or rotor according to Claim 11, **characterized in that** it includes n phases, coils of one and the same phase being connected to one another by means of at least one continuous coil wire, each wire of one and the same phase being held by two fastening devices (70) to each coil insulator (20).

13. Electric machine stator or rotor according to Claim 12, **characterized in that** the devices (70) for fastening the wire of one and the same phase are at a height (hₙ), the height (hₙ) being different for each of the n phases.
